(19) Europäisches Patentamt
European Patent Office
Office européen des brevets

(11) **EP 1 750 209 A1**

(12) **EUROPÄISCHE PATENTANMELDUNG**

(43) Veröffentlichungstag:
**07.02.2007 Patentblatt 2007/06**

(51) Int Cl.:
*G06F 17/30* (2006.01)       *G06F 17/24* (2006.01)

(21) Anmeldenummer: **05016761.8**

(22) Anmeldetag: **02.08.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **IMS Health GmbH & Co. OHG**
**60528 Frankfurt/Main (DE)**

(72) Erfinder: **Schnauffer, Thomas**
**North Bondi, NSW 2026 (AU)**

(74) Vertreter: **Müller, Frank Peter et al**
**Müller Schupfner**
**Patentanwälte**
**Bavariaring 11**
**80336 München (DE)**

(54) **Verfahren und Vorrichtung zur automatischen Darstellung von in Datenbereichen geordneten Daten**

(57) Die Erfindung betrifft ein Verfahren und eine Vorrichtung zum automatischen Darstellen von in Datenbereichen geordneten Daten (D), bei der die in einer Datenbank (1) in Spalten und Zeilen geordneten Daten über einen als Speicherplatz ausgebildete Zwischenablage (2) derart in eine grafikfähige Applikation exportierbar sind, dass ein Dialogfenster (3) eine Auswahl der Anzahl von Spalten- und/oder Zeilenüberschriften und der Position einer Zählvariablen gestattet, und dass eine Formatiereinrichtung die derart vorgenommene Auswahl entsprechend der gewünschten Darstellungsart formatiert und eine Darstellungseinrichtung, wie ein Bildschirm oder Drucker, die ausgewählten Datensätze in Kurvenform (6, 6a) und/oder Balkenform (6, 6b) darstellt.

Fig. 1

EP 1 750 209 A1

## Beschreibung

Die Erfindung bezieht sich auf ein Verfahren und eine Vorrichtung zum automatischen Darstellen von in Datenbereichen geordneten Daten.

Derartige Verfahren und Vorrichtungen sind vor allem für statistische Zwecke und Prognosen auf den verschiedenen Gebieten der Technik, Gesundheitspflege und des Handels sowie der Bevölkerungsentwicklung wichtig, um beispielsweise aus dem Verkauf bestimmter Produkte in bestimmten Zeitabschnitten, wie Monaten, an unterschiedliche Käuferkreise Rückschlüsse auch auf das zu erwartende zukünftige Kaufverhalten machen zu können. Dies ist für alle Bereiche der statistischen Steuerung, wie für die sogenannte "Just-in-Time-Produktion" von z.B. Kfz-Zubehörteilen, aber vor allem auch in der Gesundheitspflege wichtig, damit zwar genügend Medikamente, Impfstoffe und dergl. jeweils zur Verfügung stehen, aber keine erhebliche Überproduktion stattfindet, da mit Rücksicht auf das sogen. "Verfallsdatum" von Medikamenten und auch Lebensmitteln sonst zu viel Überschuss produziert würde.

Durch die Erfindung soll das konkrete technische Problem gelöst werden, beliebige Verknüpfungen von Daten, die unterschiedlichen Größen, sogen. "Zählvariablen" zugeordnet sind, graphisch mit Hilfe von Hard- und Software so darzustellen, dass der Betrachter auch ohne größere schriftliche oder mündliche Erläuterungen gewissermaßen "auf einen Blick" die statistischen Größen die betreffende Entwicklung aus einem zurückliegenden Zeitraum erfassen und hieraus eine Steuergröße für die zukünftige Steuerung und Entwicklung ableiten kann.

Dieses Problem bzw. diese Aufgabe wird gelöst durch die in den Patentansprüchen 1 und 7 beanspruchte Erfindung einerseits eines Verfahren und andererseits einer Vorrichtung. Weitere Ausbildungen und Verbesserungen der Erfindung ergeben sich aus der folgenden Beschreibung und der Zeichnung mit der Zeichnungserläuterung.

Zur Klarstellung werden folgende Begriffe erläutert:

Eine "Ergebnistabelle" bzw. ein "Matrix Report" ist die in der Datenbank gespeicherte tabellenförmige Anordnung von ermittelten Daten über beispielsweise bestimmte Zeiträume der Datenermittlungen, bestimmte Produkte, bestimmte Anwendungsgebiete und bestimmte Käufer bzw. Patientengruppen und besteht aus Zeilen (erste Analysevariablen) und Spalten (zweite Analysevariablen).

Eine "Zählvariable" (z.B. Patientenanzahl, Anzahl der Verordnungen) ist ein zu analysierender numerischer Wert innerhalb der Ergebnistabelle, beispielsweise die Anzahl von Patienten innerhalb eines Datenerfassungszeitraums. Eine zusammengehörige Anzahl von Zählvariablen soll graphisch als Kurve und/oder Balken in einem Diagramm dargestellt werden. Die Anordnung in Matrizen bzw. Blöcken ist variabel.

Die "Zwischenablage" ist ein Speicherplatz in der Datenverarbeitungsanlage bzw. dem Computer, der sowohl Textformate als auch Grafikformate unterstützt. Die Zwischenablage stellt eine Weiterentwicklung der Funktionen "Kopieren" und "Einfügen" der Datenverarbeitungsanlage dar und ist an sich bekannt.

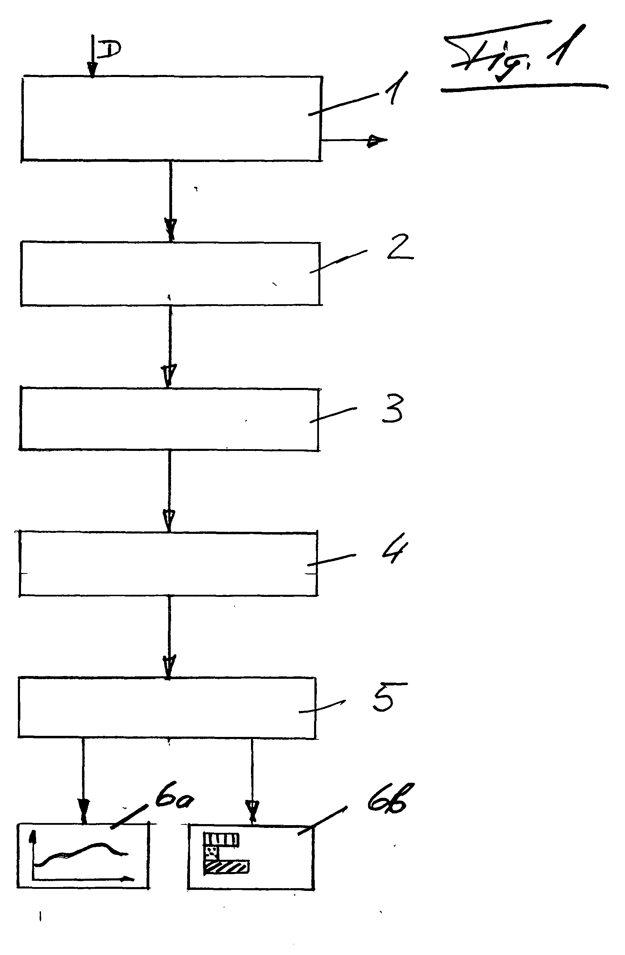

"Blöcke" sind matrixartig angeordnete Datenbereiche mit Überschriften (Header) über Spalten und vor Zeilen. Eine Überschrift hat mehrere Positionen (z.B. vier Spalten und drei Zeilen). Die Positionen können mehrere Elemente (Members) haben. Auf Figur 1a bezogen weist der dort dargestellte Block zwei Spaltenüberschriften und zwei Zeilenüberschriften mit jeweils vier Positionen auf. Dabei finden sich in der ersten (oberen) Spaltenüberschrift die Monatselemente Januar und Februar und in der zweiten darunter liegenden Spaltenüberschrift die Elemente männlich (male) und weiblich (female). In der ersten vorderen Zeilenüberschrift befinden sich die Elemente A und B, beispielsweise unterschiedliche Produkte, und in der zweiten Zeilenüberschrift die Elemente U und G, nämlich Umsatz und Gewinn der betreffenden Produkte A und B. Zusätzlich hat ein Element die Eigenschaft "hasMeasure", also ob es sich um eine Zählvariable oder nicht um eine solche handelt. "Spaltenköpfe" sind Überschriften über solchen Blöcken und entsprechend sind "Zeilenköpfe" Überschriften vor den betreffenden Zeilen.

"Verschachtelte Spaltenköpfe" sind mehrzeilige Spaltenüberschriften, wie bei dem Beispiel von Figur 1a gezeigt und "verschachtelte Zeilenköpfe" sind entsprechend mehrzeilige Zeilenüberschriften gleichfalls wie beim Beispiel von Figur 1a.

Bei der Erfindung werden die in einer Datenbank geordnet gespeicherten Daten weiterverarbeitet. Die Erfindung ist jedoch nicht beschränkt auf in Datenbanken bereits womöglich längere Zeit gespeicherte Daten; vielmehr ist die Erfindung auch anwendbar bei laufenden Datenmessungen, bei denen die gemessenen Daten unmittelbar in der erfindungsgemäßen Weise weiterverarbeitet und in Form von Kurven und/oder Balken sichtbar gemacht werden. Dies kann sowohl auf einem Bildschirm als auch anderweitig über e-Medien zur Darstellung an weit entfernter Stelle, aber auch durch Verwendung von Printmedien geschehen.

Bei der Erfindung werden die Ergebnistabellen bzw. Matrix Reports weiterverarbeitet, und zwar in eine grafikfähige Applikation formatiert und nach Verschachteln der Spaltenköpfe und Auflösung in Blöcke durch sortiertes Entladen der Daten in eine neue Tabelle (beispielsweise nach MS-Excel) über eine Zwischenablage in diese Tabellensoftware eingefügt. Aufgrund der Komplexität der Summen- und Gruppierungsbildung wird bei der Weiterverarbeitung erfindungsgemäß eine programmatische Lösung angewendet, d.h. dass für jede Konstellation der Daten (Anzahl der Überschriften, Positionen der Zählvariablen) bis zu 16 Programmteile erstellt werden können. Im Folgenden werden solche Beispiele für Blöcke mit Spalten- und Zeilenköpfen und Daten mit einer Zählvariablen als Beispiel dargestellt.

I. 1 Spalten- und 1 Zeilenüberschriften

**a. mit einer Zählvariablen für alle Daten**

```
|    |P1 |P2 |...
|X1 | 10|  5|...
|X2 | 10|  5|...
|  ...
```

```
|    |P1 |P2 |...
|X1 | 10|  5|...
|X2 | 10|  5|...
|  ...
```

**b. mit Zählvariable in 1. Spaltenüberschrift**

```
|    |P1 |P2 |...
|Rev| 10|  5|...
|COS| 10|  5|...
|  ...
```

```
|    |Rev|...|    |COS|...
|P1 | 10|...|P1 |  5|...
|P2 | 11|...|P1 |  6|...
|  ...
```

**c. mit Zählvariable in 1. Zeilenüberschrift**

```
|    |Rev|COS|...
|P1 | 10|  5|...
|P2 | 11|  5|...
| ...


|    |P1 |P2 |...
|Rev| 10|  5|...
|   |   |   |   |
|...|P1 |P2 |...
|COS| 10|  5|...
| ...
```

II. 1 Spalten- und 2 Zeilenüberschriften

**a. mit einer Zählvariablen für alle Daten**

```
|   |   |   |P1 |P2 |P1 |P2 |...
|Y1 |X1 | 10|  5| 10|  5|...
|Y1 |X2 | 10|  5| 10|  5|...
|Y2 |X1 | 10|  5| 10|  5|...
|Y2 |X2 | 10|  5| 10|  5|...
| ...


|Y1    |P1 |P2 |...


|X1    | 10|  5|...


|X2    | 10|  5|...
```

```
|Y1     |P1 |P2 |...


|X1     | 10|  5|...


|X2     | 10|  5|...
```

**b. mit Zählvariable in 2. Zeilenüberschrift**

```
|    |    |P1 |P2 |P1 |P2 |...
|X1 |Rev| 10|  5| 10|  5|...
|X1 |COS| 10|  5| 10|  5|...
|X2 |Rev| 10|  5| 10|  5|...
|X2 |COS| 10|  5| 10|  5|...
| ...
```

```
|Rev    |P1 |P2 |...
|X1     | 10|  5|...
|
|COS    |P1 |P2 |...
|X1     | 10|  5|...
|X2     | 10|  5|...
| ...
```

**c. mit Zählvariable in 1. Spaltenüberschrift**

```
|    |    |Rev |COS |...
|R1 |P1 |  10|    5|...
|R1 |P2 |  10|    5|...
|R2 |P1 |  10|    5|...
|R2 |P2 |  10|    5|...
|  ...
```

```
|R1 |Rev |    |R1 |COS |...
|P1 |  10|    |P1 |    5|...
|P2 |  10|    |P2 |    5|...
|  ...
```

```
|R2 |Rev |    |R2 |COS |...
|P1 |  10|    |P1 |    5|...
|P2 |  10|    |P2 |    5|...
|...
```

<u>III. 2 Spalten- und 1 Zeilenüberschrift</u>

**a. mit einer Zählvariablen für alle Daten**

```
|     |Y1 |Y1 |Y2 |Y2 |...
|     |P1 |P2 |P1 |P2 |...
|X1 | 10|  5| 10|  5|...
|X2 | 10|  5| 10|  5|...
|X1 | 10|  5| 10|  5|...
|X2 | 10|  5| 10|  5|...
| ...
```

```
|Y1   |P1 |P2 | ...|Y2   |P1 |P2 |...
|X1   | 10|  5| ...|X1   | 10|  5|...
|X2   | 10|  5| ...|X2   | 10|  5|...
| ...
```

**b. mit Zählvariable in 2. Spaltenüberschrift**

```
|     |P1 |P1 |P2 |P2 |...
|     |Rev|COS|Rev|COS|...
|X1   | 10|  5| 10|  5|...
|X2   | 10|  5| 10|  5|...
|X1   | 10|  5| 10|  5|...
|X2   | 10|  5| 10|  5|...
| ...
```

```
|Rev |P1 |P2 | |COS |P1 |P2 |...
|X1   | 10|  5| |X1   | 10|  5|...
|X2   | 10|  5| |X2   | 10|  5|...
| ...
```

**c. mit Zählvariable in 1. Zeilenüberschrift**

```
|       |X1 |X1 |...|X2 |X2 |...
|       |P1 |P2 |...|P1 |P2 |...
|Rev |  10|   5|...|   5|   5|...
|COS |  11|   5|...|   6|   5|...
|  ...
```

```
|X1   |P1 |P2 |...|X2 | P1| P2|...
|Rev |  10|   5|...|Rev|   6|  11|...
|       |P1 |P2 |...|X2 | P1| P2|...
|X1   |P1 |P2 |...|X2 | P1| P2|...
|COS |   5|   5|...|COS|   5|   5|...
|  ...
```

IV. 2 Spalten- und 2 Zeilenüberschriften,

**a. mit einer Zeilenvariablen für alle Daten**

```
|    |    |Y1 |Y1 |Y2 |Y2 |...
|    |    |P1 |P2 |P1 |P2 |...
|X1 |Z1 |  10|   5|  10|   5|...
|X1 |Z2 |  10|   5|  10|   5|...
|X2 |Z1 |  10|   5|  10|   5|...
|X2 |Z2 |  10|   5|  10|   5|...
|  ...
```

```
|X1   Y1|P1 |P2 |...|X1   Y2|P1 |P2 |...
|Z1     | 10|  5|...|Z1     | 10|  5|...
|Z2     | 10|  5|...|Z2     | 10|  5|...
|
|X2   Y2|P1 |P2 |...|X2   Y2|P1 |P2 |...
|Z1     | 10|  5|...|Z1     | 10|  5|...
|Z2     | 10|  5|...|Z2     | 10|  5|...
| ...
```

**b. mit Zählvariable in 2. Zeilenüberschrift**

```
|    | .   |Y1 |Y1 |Y2 |Y2 |...
|    |     |P1 |P2 |P1 |P2 |...
|X1 |Rev| 10|  5| 10|  5|...
|X1 |COS| 10|  5| 10|  5|...
|X2 |Rev| 10|  5| 10|  5|...
|X2 |COS| 10|  5| 10|  5|...
```

```
|Rev Y1|P1 |P2 |...|Rev Y2|P1 |P2 |...
|X1    | 10|  5|...|X1    | 10|  5|...
|X2    | 10|  5|...|X2    | 10|  5|...
|
|COS Y2|P1 |P2 |...|COS Y2|P1 |P2 |...
|X1    | 10|  5|...|X1    | 10|  5|...
|X2    | 10|  5|...|X2    | 10|  5|...
| ...
```

**c. Zählvariable in 2. Spaltenüberschrift**

```
|   |     |P1 |P2 |P2 |P2 |...

|   |     |Rev|COS|Rev|COS|...

|R1 |X1 | 10|  5| 10|  5|...

|R1 |X2 | 10|  5| 10|  5|...

|R2 |X1 | 10|  5| 10|  5|...

|R2 |X2 | 10|  5| 10|  5|...

|...
```

```
|Rev R1|P1 |P2 |   |COS R1|P1 |P2|...

|X1     | 10|  5| |X1     | 10|  5|...

|X2     | 10|  5| |X2     | 10|  5|...

|

|Rev R2|P1 |P2 |   |COS R2|P1 |P2 |...

|X1     | 10|  5| |X1     | 10|  5|...

|X2     | 10|  5| |X2     | 10|  5|...

| ...
```

Bei der Blockbildung wird jeweils eine Iteration über die Positionen der Überschriften durchgeführt, so dass jeweils sinnvolle Blöcke entsprechend den Definitionen gebildet werden. Gleichen oder ähnlichen Analysevariablen zugeordnete Zählvariablen werden detektiert und zusammengefasst.

Nach der Blockbildung erfolgt die Grafikbildung. Dabei wird eine zentrale Grafikerstellungsroutine während der Blockbildung aufgerufen. Diese baut dann auf dem jeweils erstellten Block eine Grafik auf. Die Blockbildung entscheidet daher anhand der Anzahl der Positionen in den Blöcken und anhand der Zählvariablen, welcher Grafiktyp, Kurvendarstellung oder Balkendarstellung, verwendet werden soll.

Für die Auswahl der Anzahl von Spalten- und/oder Zeilenüberschriften und der Positionen der Zählvariablen, dient zweckmäßigerweise ein Dialogfenster.

Anhand der Zeichnung sollen im Folgenden Ausführungsbeispiele der Erfindung beschrieben werden. Dabei zeigen:

Figur 1        ein Schema für das erfindungsgemäße Verfahren bzw. die erfindungsgemäße Vorrichtung;

Figur 1a       ein Beispiel des schon oben beschriebenen Blockes;

Figur 2        ein Beispiel für einen Bericht des Typs "Matrix Report" und

Figur 3        einen entsprechenden Block mit der zusätzlichen Symbolleiste für "Grafik erzeugen" und "selektierte Grafikinformationen";

Fig. 4 u. 4a   Beispiele für Dialogfenster gemäß der Erfindung;

| Fig. 5 u. 5a | formatierte Blöcke mit je einer (Fig. 5) Spalten- und Zeilenüberschrift und zwei Spaltenüberschriften (Fig. 5a); |
| --- | --- |
| Figur 6 | ein Beispiel für drei in einer neuen "Excel-Mappe" erstellte Grafiken; |
| Fig. 7-7a | entsprechend selektiert formatierte Grafiken in Form von Kurvenzügen (Fig. 7) und Balken (Fig. 7a) und |
| Fig. 8 u.8a | gleichfalls selektiert formatiert am Bildschirm dargestellte und vom Druck ausgedruckte Balkengrafiken. |

Gemäß Figur 1 sind in der Datenbank 1 Daten D gespeichert, und zwar geordnet nach bestimmten Größen, wie Erfassungszeitraum, Produktsorte, Umsatzgröße, Gewinngröße, Konsumenten- oder Patienteneigenschaft, zum Beispiel Geschlecht oder Altersgruppe des Käufers bzw. Patienten. Bezug nehmend auf Figur 1a bezeichnen A und B bestimmte Präparate, U Umsatzgröße und G Gewinn, Jan und Febr die betreffenden Erfassungsmonate und male sowie female das betreffende Geschlecht der Patienten. Zusätzlich könnten beispielsweise verschiedene Anwendungsgebiete, wie blutdrucksenkendes Mittel und Antihistamin, in der Datenbank erfasst sein.

Nach entsprechender Verschachtelung der Spalten- bzw. Zeilenköpfe mit einer Bereichsauswahl für die Erstellung einer Grafik insb. nach MS Excel erfolgt die Auflösung in Blöcke und das Exportieren in die Zwischenablage 2.

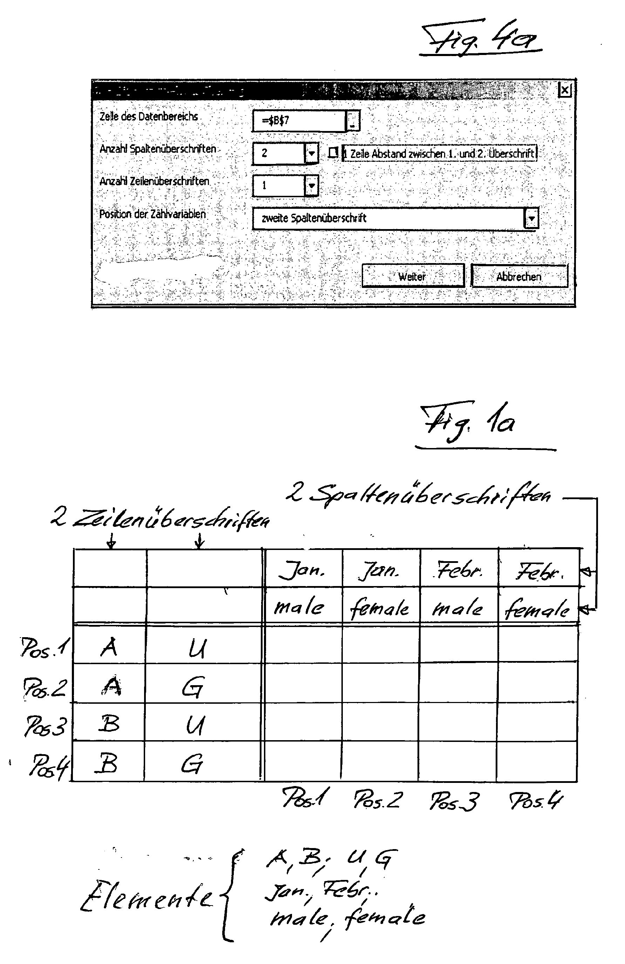

Der Bedienungsperson bietet sich im Dialogfenster 3 die Möglichkeit einer einfachen Auswahl der Anzahl von Spalten- bzw. Zeilenüberschriften und der Position der Zählvariablen beispielsweise gemäß Figuren 4/4a.

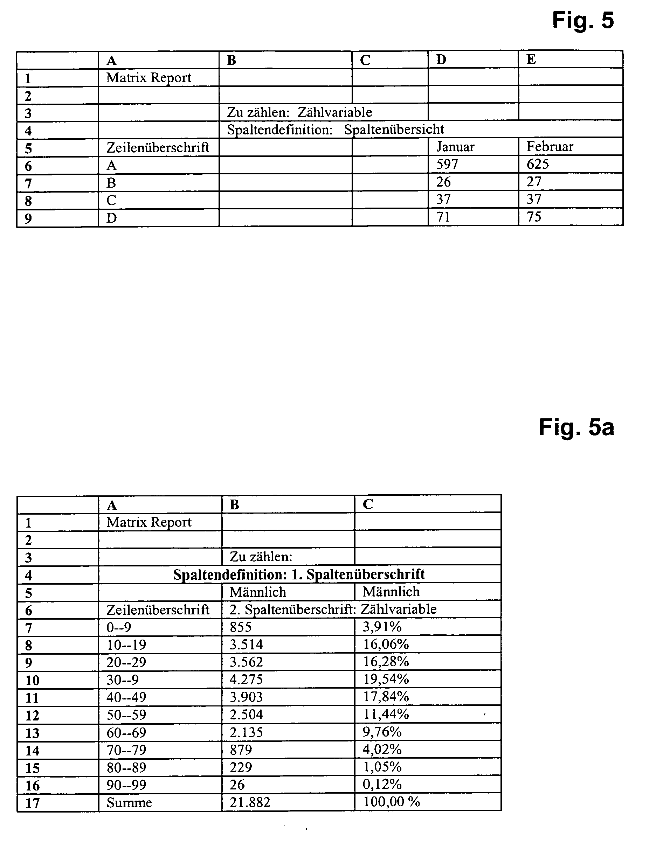

Die Auswahleinrichtung 4 ermöglicht das Auswählen der Überschriften der Spalten und Zeilen (Spalten- und Zeilenköpfe) beispielsweise gemäß Figuren 5/5a.

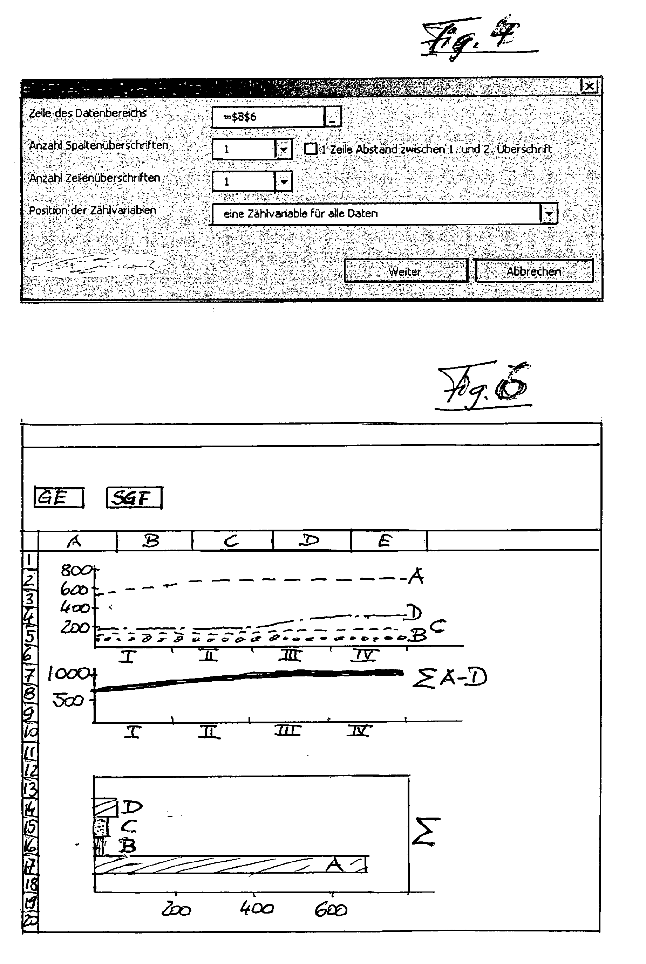

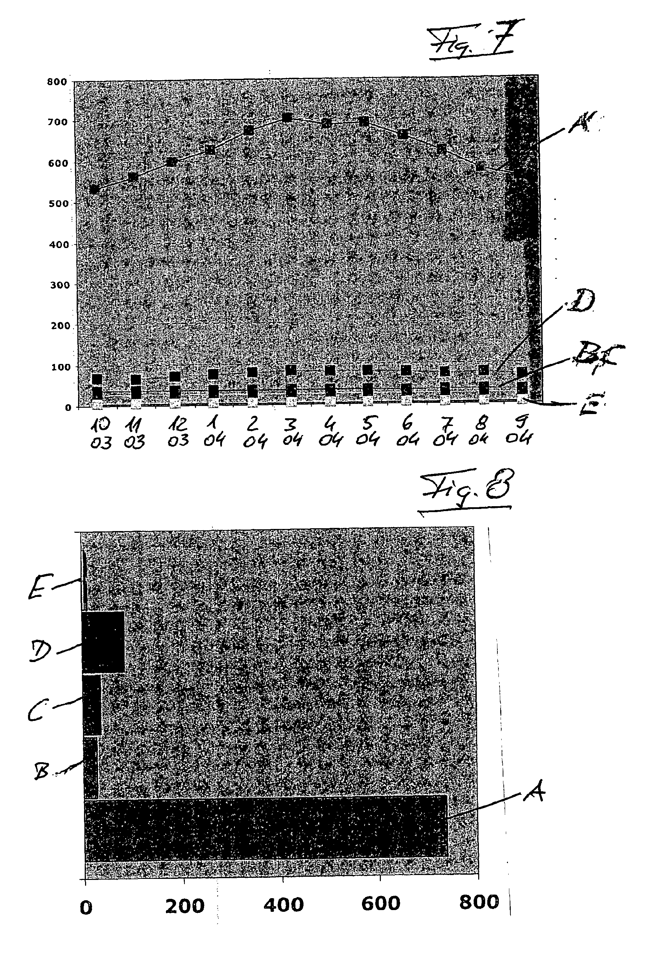

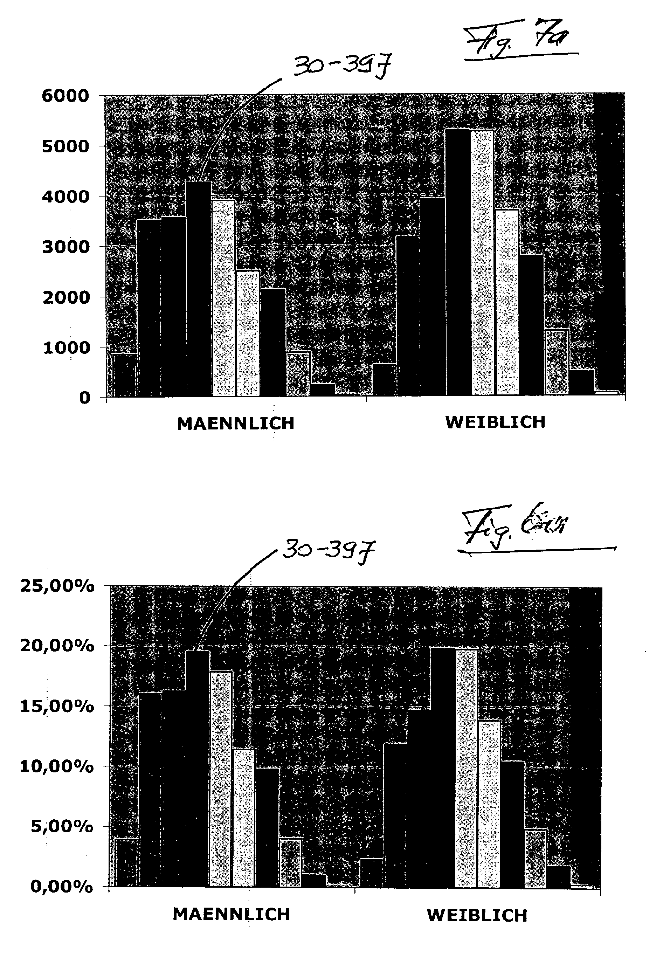

Am Bildschirm 5 erscheint eine grafische Summendarstellung beispielsweise gemäß Figur 6 und in Figuren 6a und 6b sind Bildschirmdarstellungen in Form von Kurven (Fig. 7) und Balken (Fig. 8/8a) dargestellt.

Um den in der Datenbank eingespeicherten Datenbericht inklusive der Überschrift "Matrix Report" über die Zwischenablage 2 in die grafische Applikation insb. "MS Excel" zu kopieren, wird der gesamte Bericht am Bildschirm zuerst markiert und über die in der ersten Symbolzeile dargestellten üblichen Verarbeitungsschritte "Bearbeiten" und "Kopieren" in MS Excel eingefügt.

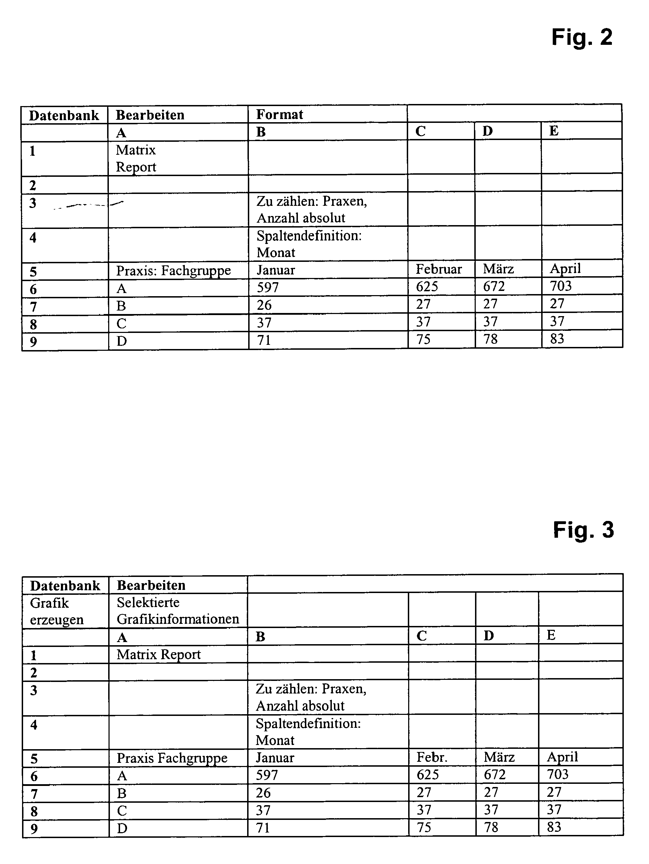

Zum Starten des Makros, das erfindungsgemäß nach z.B. Figur 3 auf dem Bildschirm mit einer zweiten Symbolleiste in Erscheinung tritt, klickt der Benutzer den Button "Grafik erzeugen" an, worauf sich ein Dialogfenster gemäß Figur 4 öffnet, in dem nun der Benutzer seine Auswahl hinsichtlich Anzahl der Spaltenüberschriften und Zeilenüberschriften und Position der Zählvariablen treffen kann.

Mit dem Feld "Zelle des Datenbereichs" wird die erste Zeile des Datenbereichs festgelegt. Befindet sich der Cursor in diesem Feld, wird in der Datentabelle die voreingestellte erste Zeile des Datenbereichs markiert. Ist dagegen die falsche Zelle markiert, kann dies durch einen Mausklick in die erste Zelle des Datenbereichs wieder korrigiert werden. Der Wert im Dialogfenster wird dann automatisch aktualisiert.

Das nun auf dem Bildschirm in Erscheinung tretende Blockbild gemäß Figur 5 weist gemäß den im Dialogfenster 2 eingegebenen Nummern und Größen eine Spaltenüberschrift als "Monat" und eine Zeilenüberschrift als "medizinische Fachgruppe A B C u. D" auf. Der Datenbereich enthält nur absolute Werte bzw. nur eine Zählvariable, beispielsweise die Anzahl der Praxen absolut.

Mit einem Klick auf den Button "Weiter" des Dialogfensters 3 von Fig. 4/4a werden nun gemäß Figur 6 drei Grafiken in einer neuen Excel Mappe erstellt. Dabei sind in der ersten oberen Grafik Werte pro Fachgruppe und Monat, in der zweiten mittleren Grafik die Summe über alle Fachgruppen pro Monat, und werden die Summen über den gesamten Zeitraum pro Fachgruppe dargestellt.

Sofern noch eine optisch deutlichere grafische Darstellung erwünscht ist, wird der Button "SGF" (Selektierte Grafik Formatieren) gedrückt, nachdem die entsprechende Grafik vorher einzeln markiert wurde. Die Grafiken nach Figuren 7 und 8 können dann in üblicher Weise in unterschiedlichen Farben oder Farbtönen abgebildet werden, um sich optisch deutlich voneinander zu unterscheiden.

Gemäß einem weiteren zweiten Beispiel, werden gemäß Figur 4a die Anzahl 2 an Spaltenüberschriften bei gleicher Anzahl 1 an Zeilenüberschriften sowie als Position der Zählvariablen die zweite Spaltenüberschrift ausgewählt. Bei diesem Beispiel könnte die erste Spaltenüberschrift das Geschlecht des Patienten und die zweite Spaltenüberschrift, welche die Zählvariable enthält, die "Patientenanzahl absolut" und "Patientenvertikale % (Summe)" enthalten. Die Zeilenüberschrift bei diesem Beispiel von Figur 4a könnte die Altersgruppen der Patienten jeweils in Gruppen von 10 Jahren, beispielsweise 0 bis 9, 10 bis 19, 20 bis 29, 30 bis 39 und dergl. aufweisen. Da die Position der Zählvariablen die "2 Spaltenübersicht" bildet, kommen als Zählvariable die "Patientenanzahl absolut" und die "Patientenvertikale % (Summe)" in Betracht. Auch hier wird dann nach Klick auf den Button "Weiter" eine Anzahl von Grafiken in einer neuen Excel Mappe erstellt. Hierfür ist keine separate Zeichnung beigefügt; dafür sind in den Figuren 7a und 8a diejenigen Grafiken veranschaulicht, die nach weiterer Formatierung durch Drücken des Button "SGF" auf dem Bildschirm zweckmäßigerweise in unterschiedlichen Farben aber auf einheitliche Größe formatiert zur Darstellung gelangen. Figur 7a verdeutlicht optisch in sehr klarer Weise die absolute Anzahl der Patienten aus den verschiedenen Altersgruppen getrennt nach männlich und weiblich, während in Figur 8a der prozentuale Patientenanteil der verschiedenen Altersgruppen wiederum aufgeteilt in männlich und weiblich zur Darstellung gelangt.

Die Erfindung stellt daher ein wichtiges technisches Hilfsmittel dar, um auf verhältnismäßig einfache Weise aus der in der Datenbank gespeicherten Fülle von Einzeldaten bestimmte Zählvariablen auszuwählen und nach entsprechender Verschachtelung, Auflösung zu Blöcken und Formatierung optisch deutlich visuell bzw. graphisch darzustellen. Die Darstellung kann auch zu Demonstrationszwecken in Form sogen. "Power-Point"-Präsentationen beispielsweise für Produktionsleiter, Entwicklungsleiter, Einkaufs- und Verkaufsleiter ein gutes Hilfsmittel sein, um von den Ergebnissen einer solchen Marktforschung optimal zu profitieren, und zwar jeweils konkret angewendet auf deren speziellen Informationsbedarf. Ein langwieriges Heraussuchen aus Listen und manuell oder geistiges Verknüpfen zahlreicher Daten aus solchen Listen können daher vermieden werden. Die Erfindung stellt daher ein wichtiges technisches Instrument zur Lösung des eingangs genannten technisches Problems dar.

**Patentansprüche**

1.  Verfahren zum automatischen Darstellen von in Datenbereichen geordneten Daten, bei dem in Spalten und Zeilen geordnete Zählvariablen über eine Zwischenablage in eine grafikfähige Applikation exportiert, eine Auswahl von zur Darstellung zu bringenden Spaltenüberschriften bzw. Zeilenüberschriften getroffen und die Position der Zählvariablen bestimmt und die betreffenden Zählvariablen nach Blockbildung als Kurve und/oder als Balken zur Darstellung gebracht werden.

2.  Verfahren nach Anspruch 1,
    **dadurch gekennzeichnet, dass**
    Datenblöcke zur Darstellung gebracht werden, welche in Spalten und Zeilen geordnete Daten sowie Spalten- und Zeilenüberschriften aufweisen, aus denen eine Zählvariable selektierbar ist.

3.  Verfahren nach Anspruch 1 oder 2,
    **dadurch gekennzeichnet, dass**
    verschachtelte Spaltenköpfe in Datenblöcke aufgelöst werden.

4.  Verfahren nach einem der vorhergehenden Ansprüche,
    **dadurch gekennzeichnet, dass**
    eine Symbolleiste auf einem Bildschirm zur Darstellung gebracht wird, welche Symbole für die notwendigen Funktionsaufrufe bereitstellen.

5.  Verfahren nach einem der vorhergehenden Ansprüche,
    **dadurch gekennzeichnet, dass** die Zeilen- bzw. Spaltenüberschriften in mindestens zwei Elemente (Members) aufgeteilt werden, welche unterschiedlichen Eigenschaften der Daten entsprechen.

6.  Verfahren nach einem der vorhergehenden Ansprüche,
    **dadurch gekennzeichnet, dass**
    die Überschriften (Headers) in mehrere Positionen aufgeteilt werden.

7.  Vorrichtung zur Darstellung von in Datenbereichen geordneten Daten, bei der die in einer Datenbank (1) in Spalten und Zeilen geordneten Daten über eine als Speicherplatz ausgebildete Zwischenablage (2) derart in eine grafikfähige Applikation exportierbar sind, dass ein Dialogfenster (3) an einem Bildschirm eine Auswahl der Anzahl von Spalten- und/oder Zeilenüberschriften und eine Auwahl der Position einer Zählvariablen eines Datenbereichs (Blocks) gestattet, und dass eine Formatierungseinrichtung die derart vorgenommene Auswahl entsprechend der gewünschten Darstellungsart formatiert und dass eine Darstellungseinrichtung die ausgewählten Datensätze in Kurvenform (6; 6a) und/oder Balkenform (6; 6b) darstellt.

8.  Vorrichtung nach Anspruch
    **dadurch gekennzeichnet, dass**
    eine Datenverarbeitungseinrichtung mindestens eine Symbolleiste an einem Bildschirm zur Darstellung bringt, welche Symbole von Funktionen, wie "Grafikerzeugen" und "selektierte Grafikformatierung" enthält und bei Betätigung auslöst.

**9.** Vorrichtung nach Anspruch 7 oder 8,
**dadurch gekennzeichnet, dass**
die grafikfähige Applikation Datenblöcke (Figur 1a) an einem Bildschirm zur Darstellung bringt, welche in Spalten und Zeilen geordnete Daten sowie Spaltenüberschriften und Zeilenüberschriften für Zählvariable aufweist.

**10.** Vorrichtung nach einem der Ansprüche 7 bis 9,
**dadurch gekennzeichnet, dass**
für jede Datenkonstellation (Anzahl der Überschriften, Positionen der Zählvariablen) sechzehn Programmteile vorgesehen sind.

**11.** Vorrichtung nach einem der Ansprüche
**dadurch gekennzeichnet, dass**
zur Bildung sinnvoller Datenblöcke eine Iteration über die Positionen der Überschriften erfolgt.

**12.** Vorrichtung nach einem der Ansprüche
**dadurch gekennzeichnet, dass**
eine zentrale Grafikerstellungsroutine für den jeweils erstellten Datenblock eine Grafik aufbaut und dass der Grafiktyp von der Anzahl der Positionen in den Datenblöcken und den Zählvariablen abhängt.

Fig. 1

# Fig. 2

| Datenbank | Bearbeiten | Format | | | |
|---|---|---|---|---|---|
| | A | B | C | D | E |
| 1 | Matrix Report | | | | |
| 2 | | | | | |
| 3 | | Zu zählen: Praxen, Anzahl absolut | | | |
| 4 | | Spaltendefinition: Monat | | | |
| 5 | Praxis: Fachgruppe | Januar | Februar | März | April |
| 6 | A | 597 | 625 | 672 | 703 |
| 7 | B | 26 | 27 | 27 | 27 |
| 8 | C | 37 | 37 | 37 | 37 |
| 9 | D | 71 | 75 | 78 | 83 |

# Fig. 3

| Datenbank | Bearbeiten | | | | |
|---|---|---|---|---|---|
| Grafik erzeugen | Selektierte Grafikinformationen | | | | |
| | A | B | C | D | E |
| 1 | Matrix Report | | | | |
| 2 | | | | | |
| 3 | | Zu zählen: Praxen, Anzahl absolut | | | |
| 4 | | Spaltendefinition: Monat | | | |
| 5 | Praxis Fachgruppe | Januar | Febr. | März | April |
| 6 | A | 597 | 625 | 672 | 703 |
| 7 | B | 26 | 27 | 27 | 27 |
| 8 | C | 37 | 37 | 37 | 37 |
| 9 | D | 71 | 75 | 78 | 83 |

*Fig. 4a*

| Zeile des Datenbereichs | =$B$7 |
| Anzahl Spaltenüberschriften | 2 ▾ | ☐ 1 Zeile Abstand zwischen 1. und 2. Überschrift |
| Anzahl Zeilenüberschriften | 1 ▾ |
| Position der Zählvariablen | zweite Spaltenüberschrift ▾ |

Weiter    Abbrechen

*Fig. 1a*

2 Zeilenüberschriften         2 Spaltenüberschriften

|  |  |  | Jan. | Jan. | Febr. | Febr. |
|---|---|---|------|------|-------|-------|
|  |  |  | male | female | male | female |
| Pos.1 | A | U |  |  |  |  |
| Pos.2 | A | G |  |  |  |  |
| Pos.3 | B | U |  |  |  |  |
| Pos.4 | B | G |  |  |  |  |

Pos.1   Pos.2   Pos.3   Pos.4

Elemente { A, B, U, G
Jan., Febr...
male, female

## Fig. 5

|   | A | B | C | D | E |
|---|---|---|---|---|---|
| 1 | Matrix Report | | | | |
| 2 | | | | | |
| 3 | | Zu zählen: Zählvariable | | | |
| 4 | | Spaltendefinition: Spaltenübersicht | | | |
| 5 | Zeilenüberschrift | | | Januar | Februar |
| 6 | A | | | 597 | 625 |
| 7 | B | | | 26 | 27 |
| 8 | C | | | 37 | 37 |
| 9 | D | | | 71 | 75 |

## Fig. 5a

|   | A | B | C |
|---|---|---|---|
| 1 | Matrix Report | | |
| 2 | | | |
| 3 | | Zu zählen: | |
| 4 | Spaltendefinition: 1. Spaltenüberschrift | | |
| 5 | | Männlich | Männlich |
| 6 | Zeilenüberschrift | 2. Spaltenüberschrift: Zählvariable | |
| 7 | 0--9 | 855 | 3,91% |
| 8 | 10--19 | 3.514 | 16,06% |
| 9 | 20--29 | 3.562 | 16,28% |
| 10 | 30--9 | 4.275 | 19,54% |
| 11 | 40--49 | 3.903 | 17,84% |
| 12 | 50--59 | 2.504 | 11,44% |
| 13 | 60--69 | 2.135 | 9,76% |
| 14 | 70--79 | 879 | 4,02% |
| 15 | 80--89 | 229 | 1,05% |
| 16 | 90--99 | 26 | 0,12% |
| 17 | Summe | 21.882 | 100,00 % |

Fig. 4

| | Zelle des Datenbereichs | =$B$6 |
| | Anzahl Spaltenüberschriften | 1 | ☐ 1 Zeile Abstand zwischen 1. und 2. Überschrift |
| | Anzahl Zeilenüberschriften | 1 |
| | Position der Zählvariablen | eine Zählvariable für alle Daten |

Weiter    Abbrechen

Fig. 6

*Fig. 7*

*Fig. 8*

*Fig. 7a*

30-39J

MAENNLICH      WEIBLICH

*Fig. 6b*

30-39J

MAENNLICH      WEIBLICH

**Europäisches
Patentamt**

## EUROPÄISCHER RECHERCHENBERICHT

Nummer der Anmeldung

EP 05 01 6761

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SCHELS I: "Kapitel 11: Pivot-Tabellenberichte" EXCEL 2003 KOMPENDIUM, 21. November 2003 (2003-11-21), Seiten 405-456, XP002353819 ISBN: 3-8272-6560-6 * Seite 405, Absatz 11.1 - Seite 408 * * Seite 418, Absatz 11.4 - Seite 441 * * Seite 441, Absatz 11.5 - Seite 447 * * Seite 455, Absatz 11.7 - Seite 456 * ----- | 1-12 | G06F17/30 G06F17/24 |
| A | US 5 581 678 A (KAHN ET AL) 3. Dezember 1996 (1996-12-03) * das ganze Dokument * ----- | 1,7,12 | |
| A | EP 1 220 158 A (BSP INC) 3. Juli 2002 (2002-07-03) * Zusammenfassung * * Absatz [0007] - Absatz [0033] * ----- | 1-12 | |
| A | US 5 727 161 A (PURCELL, JR. ET AL) 10. März 1998 (1998-03-10) * Zusammenfassung * ----- | 1-12 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| Berlin | 14. November 2005 | Lechenne-Stiller, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 05 01 6761

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-11-2005

| Im Recherchenbericht angeführtes Patentdokument | Datum der Veröffentlichung | Mitglied(er) der Patentfamilie | Datum der Veröffentlichung |
|---|---|---|---|
| US 5581678 A | 03-12-1996 | KEINE | |
| EP 1220158 A | 03-07-2002 | JP 2002251589 A<br>JP 2004118867 A<br>SG 99377 A1 | 06-09-2002<br>15-04-2004<br>27-10-2003 |
| US 5727161 A | 10-03-1998 | KEINE | |

EPO FORM P0461

Für nähere Einzelheiten zu diesem Anhang : siehe Amtsblatt des Europäischen Patentamts, Nr.12/82